(19) Europäisches Patentamt

European Patent Office

Office européen des brevets

(11) **EP 1 729 467 A2**

(12) **EUROPEAN PATENT APPLICATION**

(43) Date of publication:
**06.12.2006 Bulletin 2006/49**

(51) Int Cl.:
***H04L 12/56*** *(2006.01)*

(21) Application number: **06011383.4**

(22) Date of filing: **01.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **01.06.2005 KR 20050046508**

(71) Applicant: **Samsung Electronics Co., Ltd.
Suwon-si
Gyeonggi-do (KR)**

(72) Inventors:
  • **Koo, Jin-Kyu**
    **Suwon-si,**
    **Gyeonggi-do (KR)**
  • **Suh, Chang-Ho**
    **Bundang-gu,Seongnam-si,**
    **Gyeonggi-do (KR)**

  • **Hong, Sung-Kwon**
    **Seol (KR)**
  • **Kim, Young-Kyun**
    **Bundang-gu,**
    **Seongnam-si,Gyeonggi-do (KR)**
  • **Park, Dong-Seek**
    **Yongin-si,**
    **Gyeonggi-do (KR)**
  • **Cho, Young-Kwon  249-1204,Ssangyong APT**
    **Yeongtong-gu,Suwon-si,**
    **Gyeonggi-do (KR)**

(74) Representative: **Grünecker, Kinkeldey,
Stockmair & Schwanhäusser
Anwaltssozietät
Maximilianstrasse 58
80538 München (DE)**

(54) **Apparatus and method for transmitting/receiving preamble signal in a wireless communication system**

(57)    An apparatus and method for transmitting/receiving a multi-functional preamble signal in a wireless communication system are provided. In an apparatus for transmitting a preamble signal in a wireless communication system, a first generator generates a predetermined ZAC sequence. A circular shifter circular-shifts the ZAC sequence according to a BS ID. A second generator generates a sequence in which samples of the ZAC sequence alternate with samples of the circular-shifted sequence. A repeater generates a baseband preamble signal by repeating the sequence received from the second generator.

FIG.1

## Description

### PRIORITY

This application claims priority under 35 U.S.C. § 119 to an application entitled "Apparatus and Method for Transmitting/Receiving Preamble Signal in a Wireless Communication System" filed in the Korean Intellectual Property Office on June 1, 2005 and assigned Serial No. 2005-46508, the contents of which are incorporated herein by reference.

### BACKGROUND OF THE INVENTION

#### 1. Field of the Invention

The present invention relates generally to an apparatus and method for transmitting/receiving a preamble signal in a wireless communication system, and in particular, to an apparatus and method for transmitting/receiving a multipurpose preamble signal.

#### 2. Description of the Related Art

In a wireless communication system supporting wireless communication service, a Base Station (BS) exchanges signals with a user terminal in frames. Thus BSs have to mutually acquire synchronization for frame transmission and reception. For synchronization acquisition, the BS transmits a synchronization signal such that the user terminal can detect the start of a frame. The user terminal detects frame timing from the synchronization signal and demodulates a received frame based on the frame timing. Typically, the synchronization signal is a preamble sequence preset between the BS and the user terminal.

The most significant function of the preamble sequence is frame synchronization. The preamble can be additionally designed for supporting other functions simultaneously. For this, a modification has to be made to the structure of the preamble sequence. The functionalities that the preamble sequence can support and preamble sequence structure requirements for implementing the functionalities are presented as follows.

1. Frame synchronization and frequency offset estimation: recursive in time.
2. BS identifier (ID): different preamble sequence for different BS.
3. Channel estimation: Zero Auto-Correlation (ZAC) property for preamble sequence.

As described above, the preamble sequence must be recursive in time to provide frame synchronization and frequency offset estimation. This is a requirement for coarse synchronization. For fine synchronization, synchronization must be estimated based on the correlation property of a sequence.

The ZAC property is required to estimate an optimum impulse response coefficient. Equation (1) below is shown for a sequence of length N having the ZAC property, z(n),

$$\sum_{n=0}^{N-1} z(n) \cdot \frac{circular\_shift(z(n))}{m} = \begin{cases} non-zero, m=0 \\ 0, m \neq 0 \end{cases}$$

$$\ldots \ldots (1)$$

where $\dfrac{circular\_shift(z(n))}{m}$ denotes a function of circular-shifting an input sequence being a factor m times.

Thus, the auto-correlation of a ZAC sequence is a non-zero and the correlation between the ZAC sequence and its circular-shifted version is zero. For example, the ZAC sequence can be created by Fast Fourier Transform (FFT)-processing signals having the same amplitude. The simplest example is (1, 1, -1, 1).

If each BS uses a different preamble sequence, it is identified by the preamble. However, since the user terminal does not know what sequence is received during synchronization estimation, it has to detect the sequence by correlating the sequence with every possible sequence. This is a considerable constraint in terms of computation volume. Accordingly, there exists a need for a new preamble structure for supporting the above three functionalities and fine ) synchronization functionality simultaneously, while reducing the computation volume.

## SUMMARY OF THE INVENTION

An object of the present invention is to substantially solve at least the above problems and/or disadvantages and to provide at least the advantages below. Accordingly, an object of the present invention is to provide an apparatus and method for transmitting/receiving a multi-functional preamble signal in a wireless communication system.

Another object of the present invention is to provide an apparatus and method for transmitting/receiving a preamble signal supporting timing synchronization, frequency offset estimation, BS identification, and channel estimation in a wireless communication system.

A further object of the present invention is to provide an apparatus and method for transmitting/receiving a preamble signal having the ZAC property in a wireless communication system.

Still another object of the present invention is to provide an apparatus and method for reducing computation volume at a receiver when a BS is identified by a preamble signal in a wireless communication system.

Yet another object of the present invention is to provide an apparatus and method for performing coarse synchronization, fine synchronization, frequency offset estimation, BS identification, and channel estimation using a preamble signal in a wireless communication system.

The above objects are achieved by providing an apparatus and method for transmitting/receiving a multi-functional preamble signal in a wireless communication system.

According to one aspect of the present invention, there is provided an apparatus for transmitting a preamble signal in a wireless communication system, having a first generator for generating a predetermined ZAC sequence; a circular shifter for circular-shifting the ZAC sequence according to a BS ID; a second generator for generating a sequence in which samples of the ZAC sequence alternate with samples of the circular-shifted sequence; and a repeater for generating a baseband preamble signal by repeating the sequence received from the second generator.

According to another aspect of the present invention, there is provided an apparatus for receiving a preamble signal in the wireless communication system where the preamble signal is generated by circular-shifting the ZAC sequence according to a BS ID, alternating samples of a ZAC sequence with samples of the circular-shifted sequence, and repeating the resulting sequence; a primary synchronization estimator acquires coarse synchronization from received samples using an iterative property of the preamble signal in time; a secondary synchronization estimator acquires fine synchronization by extracting received samples according to the coarse synchronization; and correlating samples at first positions in the extracted samples with the ZAC sequence, the first positions being even positions or odd positions.

According to a further aspect of the present invention, there is provided a method of transmitting a preamble signal in a wireless communication system where a predetermined ZAC sequence is generated and circular-shifted according to a BS ID; a preamble sequence is generated in which samples of the ZAC sequence alternate with samples of the circular-shifted sequence; and a baseband preamble signal is generated by repeating the preamble sequence.

According to still another aspect of the present invention, there is provided a method of receiving a preamble signal in the wireless communication system where the preamble signal is generated by circular-shifting the ZAC sequence according to a BS ID, alternating samples of a ZAC sequence with samples of the circular-shifted sequence, and repeating the resulting sequence; coarse synchronization is acquired from received samples using an iterative property of the preamble signal in time; fine synchronization is acquired by extracting received samples according to the coarse synchronization and correlating samples at first positions in the extracted samples with the ZAC sequence; and the first positions are even positions or odd positions.

## BRIEF DESCRIPTION OF THE DRAWINGS

The above and other objects, features and advantages of the present invention will become more apparent from the following detailed description when taken in conjunction with the accompanying drawings in which:

FIG. 1 illustrates the structure of a preamble sequence according to the present invention;
FIG. 2 is a block diagram schematically illustrating a transmitter for transmitting a preamble signal in a wireless communication system according to the present invention;
FIG. 3 is a block diagram schematically illustrating a receiver for receiving a preamble signal in the wireless communication system according to the present invention;
FIG. 4 is a detailed block diagram schematically illustrating a primary synchronization estimator illustrated in FIG. 3 according to the present invention;
FIG. 5 is a flowchart illustrating an operational algorithm of the primary synchronization estimator according to the present invention;
FIG. 6 is a detailed block diagram schematically illustrating a secondary synchronization estimator illustrated in FIG. 3 according to the present invention;
FIG. 7 is a flowchart illustrating an operational algorithm of the secondary synchronization estimator according to the present invention;
FIG. 8 is a detailed block diagram schematically illustrating a cell identifier illustrated in FIG. 3 according to the present invention;
FIG. 9 is a flowchart illustrating an operational algorithm of the cell identifier according to the present invention;
FIG. 10 is a detailed block diagram schematically illustrating a channel estimator illustrated in FIG. 3 according to the present invention; and
FIG. 11 is a flowchart illustrating an operational algorithm of the channel estimator according to the present invention.

**DETAILED DESCRIPTION OF THE PREFERRED EMBODIMENTS**

Preferred embodiments of the present invention will be described herein below with reference to the accompanying drawings. In the following description, well-known functions or constructions are not described in detail since they would obscure the invention in unnecessary detail.

The present invention provides a method of performing coarse synchronization, fine synchronization, frequency offset estimation, base station (BS) identification and channel estimation using a preamble signal.

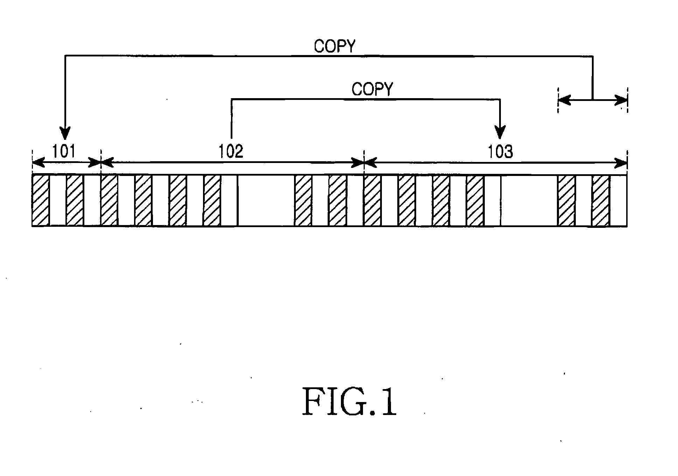

FIG. 1 illustrates the structure of a preamble sequence according to the present invention. Referring to FIG. 1, it is assumed that the length of a preamble except a Cyclic Prefix (CP) is N. A ZAC sequence common to all BSs is shaded in a second part 102, and it is mathematically expressed as $\left\{ a(n) \right\}_{n=1}^{N/4}$ . As noted from the mathematical representation, the length of the ZAC sequence is a fourth of the preamble length N. The remainder of the second part 102 is a circular-shift version of the ZAC sequence. The circular shift value is a BS ID. A third part 103 is a copy of the second part 102 and a first part 101 is a copy of a predetermined number of last samples of the third part 103. Thus, the first part 101 serves as a CP.

As described above, the preamble sequence is so configured as to be iterative in time. Hence, it enables coarse synchronization and frequency offset estimation. Since every BS uses the common ZAC sequence, a receiver (i.e. a terminal) can acquire fine synchronization by detecting the time when the common sequence was received.

After acquisition of the fine synchronization, the receiver acquires a BS ID by determining how much the circular shift version of the ZAC sequence is relatively shifted from the ZAC sequence.

If the entire preamble sequence takes the properties of a ZAC sequence, the channel impulse response is as long as the preamble sequence length. However, it is not in the present invention because the entire preamble does not have the ZAC property. Nonetheless, if the BS ID is m, i.e. the circular shift value is m, the ZAC property is assumed be at most 2m samples. Thus when 2m is set to be longer than an effective valid delay spread, channel estimation is possible.

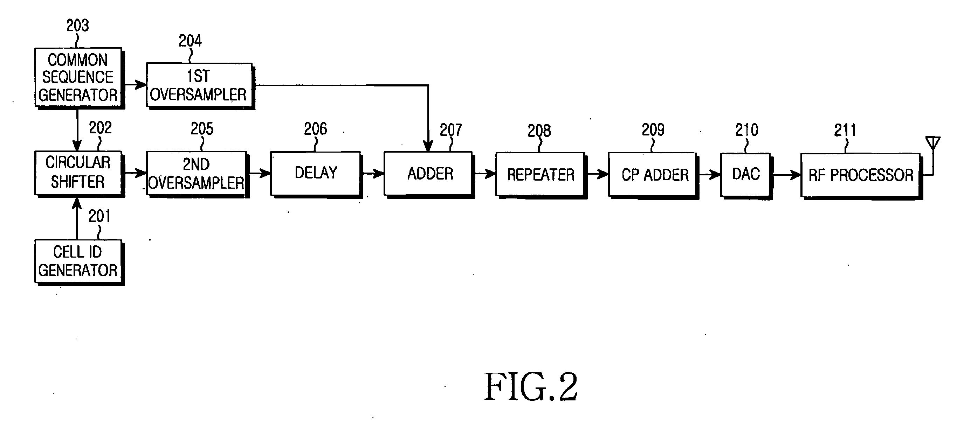

FIG. 2 is a block diagram schematically illustrating a transmitter for transmitting a preamble signal in a wireless communication system according to the present invention. Referring to FIG. 2, the preamble transmitter includes a cell ID generator 201, a circular shifter 202, a common sequence generator 203, a first oversampler 204, a second oversampler 205, a delay 206, an adder 207, a repeater 208, a CP(Cyclic Prefix) adder 209, a Digital-to-Analog Converter (DAC) 210, and a Radio Frequency (RF) processor 211 and an antenna.

In operation, the common sequence generator 203 generates a ZAC sequence of a predetermined length, common to all BSs. For example, the ZAC sequence is created by FFT-processing signals with the same amplitude. The circular shifter 202 circular-shifts the ZAC sequence according to a BS ID or a cell ID.

The first oversampler 204 performs 2x oversampling on the ZAC sequence by inserting zeroes into samples. The second oversampler 205 performs 2x oversampling on the sequence received form the circular shifter 202. The delay 206 delays the oversample sequence (i.e. oversample data) by one sample.

The adder 207 adds the oversamples from the first oversampler 204 to the delayed oversamples from the delay 206, thereby creating sample data corresponding to the second part 102 of FIG. 1. The repeater 208 repeats the sample data from the adder 207 once, thereby creating the second and third parts 102 and 103 of FIG. 1. The CP adder 209 adds a copy of a predetermined number of last samples of the sample data received from the repeater 208 before the sample data.

The resulting preamble signal can be used in any frame-based system. For instance, in an OFDM system, the sample data from the CP adder 209 is an Orthogonal Frequency Division Multiplexing (OFDM) symbol.

The DAC 210 converts the CP-added sample data to an analog signal. The RF processor 211, including a filter and a front-end unit, processes the analog signal to a wireless signal, such as RF, and transmits it via a transmit (Tx) antenna.

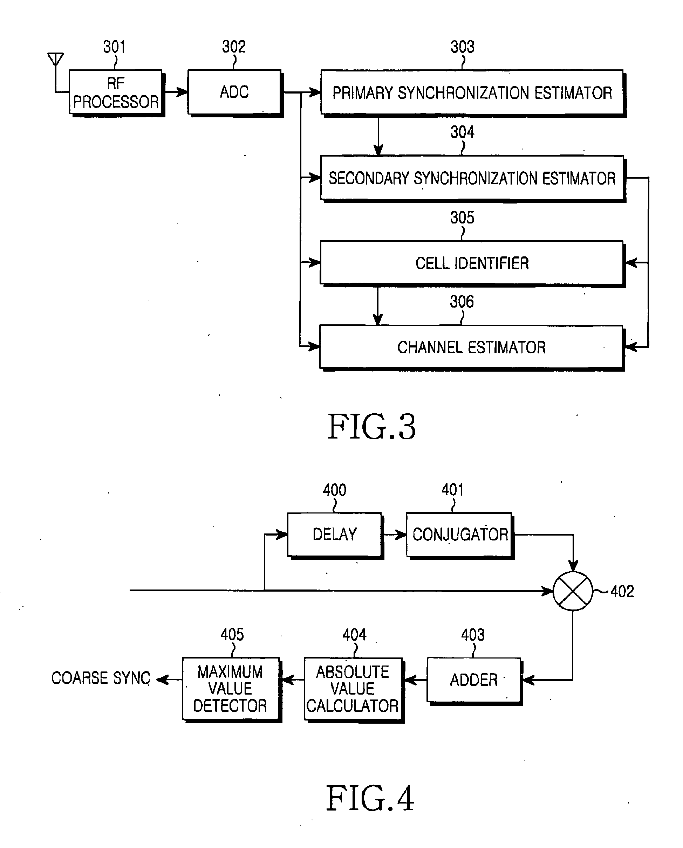

FIG. 3 is a block diagram schematically illustrating a receiver for receiving a preamble signal in the wireless communication system according to the present invention. Referring to FIG. 3, the preamble receiver includes an RF processor 301, an Analog-to-Digital Converter (ADC) 302, a primary synchronization estimator 303, a secondary synchronization estimator 304, a cell identifier 305, and a channel estimator 306.

In operation, the RF processor 301, including a front-end unit and a filter, downconverts an RF signal received on a wireless channel to a baseband signal. The ADC 302 converts the analog baseband signal received from the RF processor 301 to a digital signal (i.e. sample data).

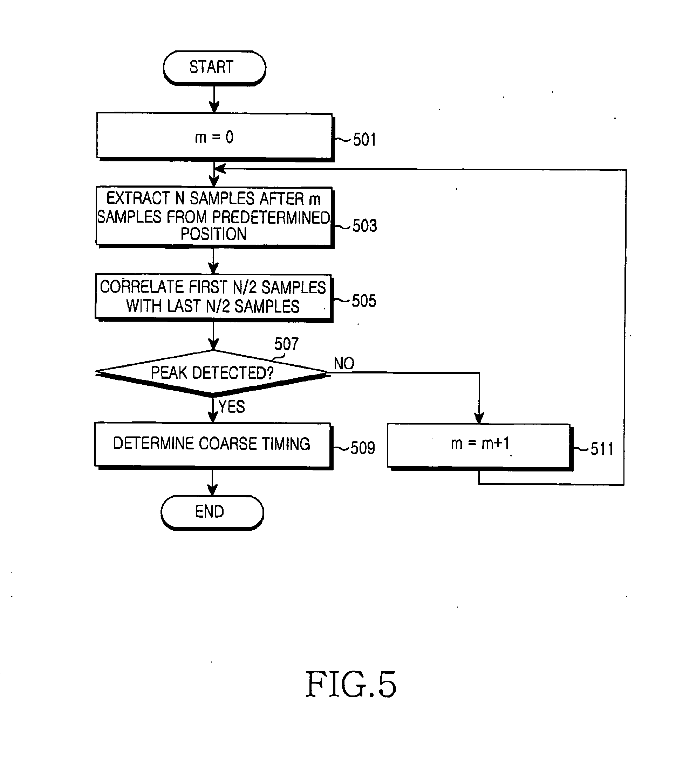

The primary synchronization estimator 303 estimates a coarse timing, which will be described later in detail with reference to FIGs. 4 and 5.

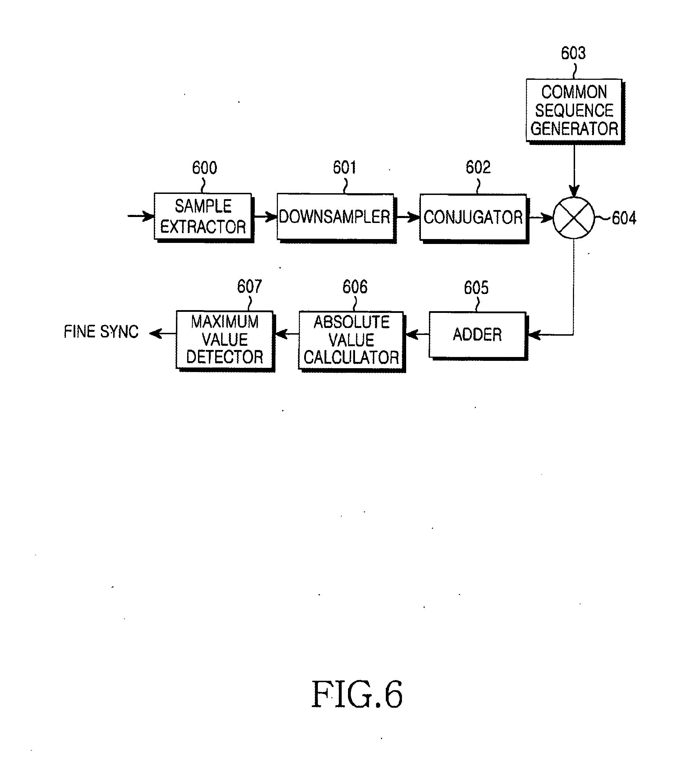

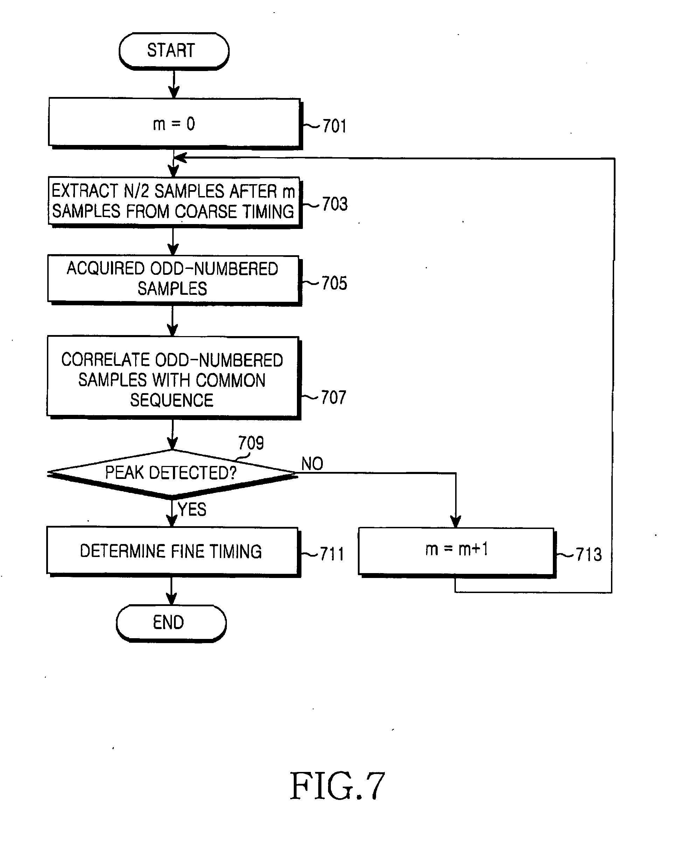

The secondary synchronization estimator 304 extracts samples of length N/2 according to the coarse timing and correlates the odd-numbered sequence of the samples with a known common ZAC sequence, thereby acquiring fine synchronization. The operation of the secondary synchronization estimator 304 will be described later in detail with reference to FIGs. 6 and 7.

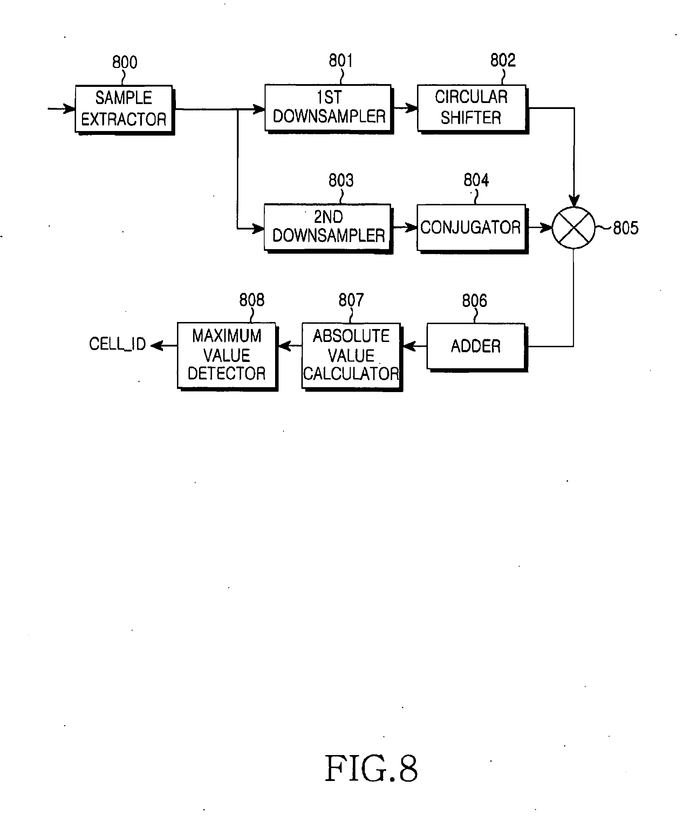

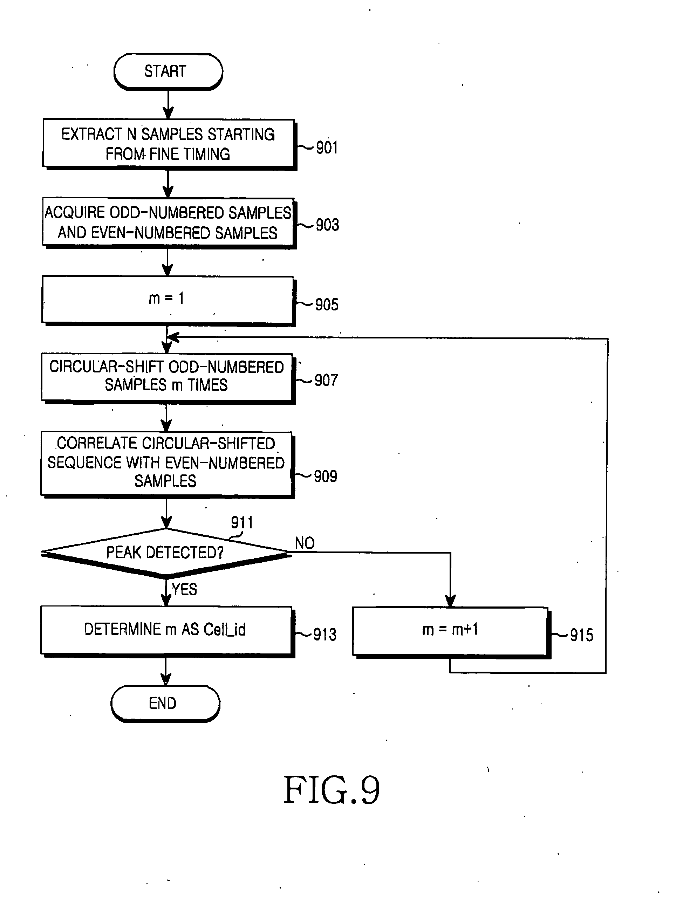

The cell identifier 305 extracts samples of length N/2 from the fine timing, detects a relative shift value between the odd-numbered and even-numbered sequences of the extracted samples, and determines a BS ID according to the relative shift value. The cell identification operation will be described in more detail below with reference to FIGs. 8 and 9.

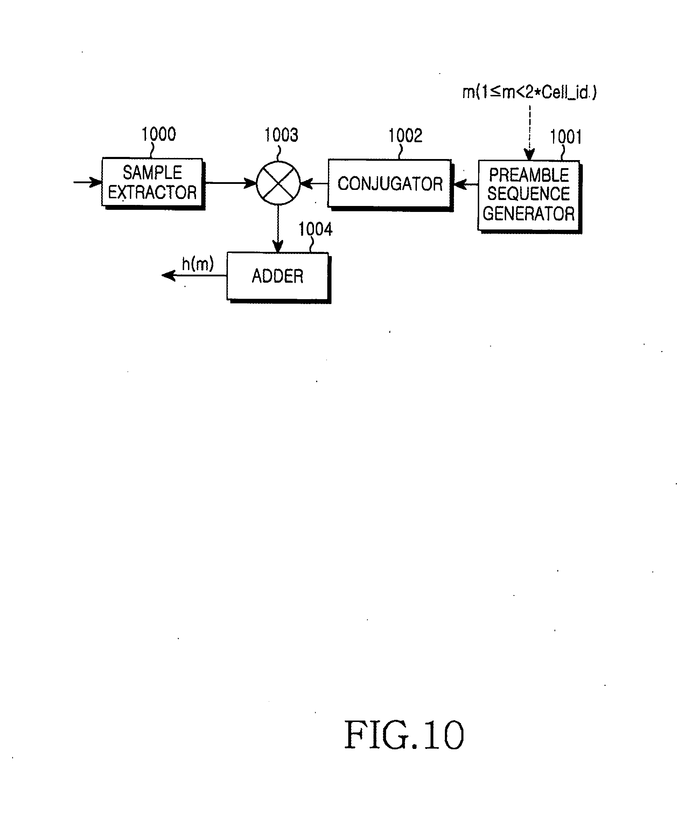

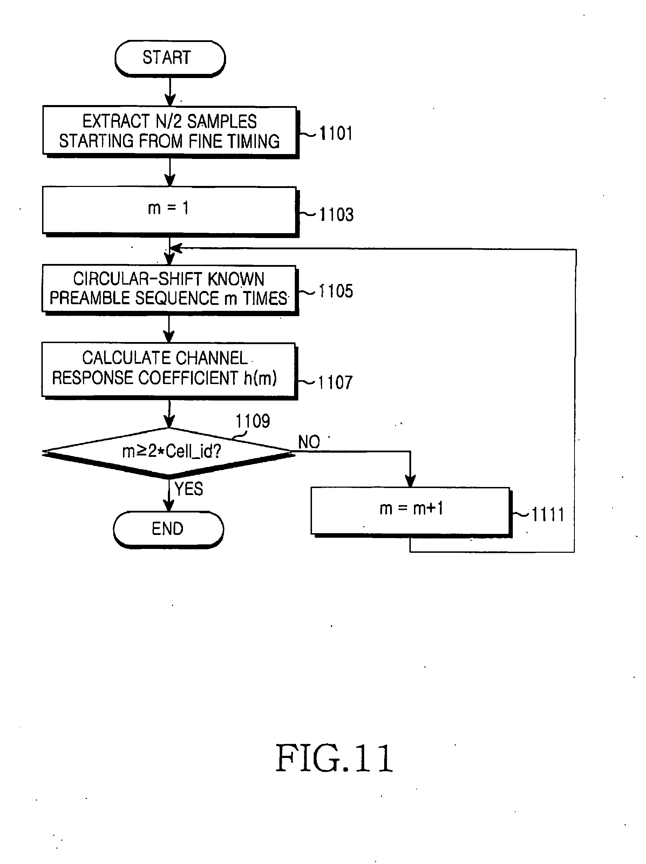

The channel estimator 306 extracts the samples of N/2 from the fine timing and calculates a channel response coefficient by correlating the extracted samples with a preamble sequence corresponding to the BS ID, while shifting the preamble sequence by one each time. The operation of the channel estimator 306 will be described later in more detail below with reference to FIGs. 10 and 11.

Before detailing the operations of the above components of the receiver, the transmission signal and the received signal are expressed in Equation (2) below. If the CP length is N/8 and the entire preamble sequence is

$\left\{p(n)\right\}_{n=-N/8+1}^{N}$ , the ZAC sequence $\left\{p(2n-1)_{n=1}^{N/4}\right\}=\left\{a(n)_{n=1}^{N/4}\right\}$ and the received signal r(n) is given as set forth in Equation (2).

$$r(n) = h(n) * p(n) + w(n)$$

$$\dots\dots(2)$$

where h(n) denotes a channel impulse response and w(n) denotes Additive White Gaussian Noise (AWGN).

In accordance with the present invention, the coarse synchronization is expressed as set forth in Equation (3).

$$coarse\_sync = \frac{arg\,max}{m}\left|\sum_{n=0}^{N/2-1} r(m+n)r(m+n+N/2)^*\right|$$

$$\dots\dots(3)$$

The configuration of the primary synchronization estimator 303 operating according to Equation (3) is illustrated in detail in FIG. 4.

Referring to FIG. 4, the primary synchronization estimator 303 includes a delay 400, a conjugator 401, a multiplier 402, an adder 403, an absolute value calculator 404, and a maximum value detector 405.

In operation, received samples from the ADC 302 are provided to the delay 400 and the multiplier 402. The delay 400 delays the samples by a predetermined time. The predetermined time delay is set so that two samples to be multiplied by the multiplier 402 are spaced apart from each other by a distance of N/2.

The conjugator 401 computes the complex conjugates of the delayed samples. The multiplier 402 multiplies the current received samples by the conjugated samples. The adder 403 adds the current value received from the multiplier 402 to previous (N/2-1) input values. The absolute value calculator 404 calculates the absolute value of the sum received from the adder 403. The maximum value detector 405 detects the maximum (or peak) of absolute values received from the absolute value calculator 404, and determines the time of the maximum value as the coarse timing. The coarse timing is transmitted to the secondary synchronization estimator 304.

FIG. 5 is a flowchart illustrating an operational algorithm of the primary synchronization estimator according to the present invention. Referring to FIG. 5, the primary synchronization estimator 303 sets a variable m to an initial value '0' in step 501 and extracts N samples, starting from a position m samples apart from a predetermined start in step 503.

In step 505, the primary synchronization estimator 303 correlates the first N/2 samples with the last N/2 samples.

In step 507, the primary synchronization estimator 303 compares the correlation with a threshold to detect a peak. If the peak is not detected, the primary synchronization estimator 303 increases m by one in step 511 and returns to step 503. If the peak is detected, the primary synchronization estimator 303 determines the position of the peak as a coarse timing in step 509 and terminates the algorithm.

In the present invention, the fine synchronization is acquired by Equation (4) below.

$$fine\_sync = coarse\_sync + \underset{m}{arg\,max} \left| \sum_{n=0}^{N/2-1} r(coarse\_sync + m + 2n)a(n+1)^* \right|$$

$$\ldots\ldots(4)$$

The configuration of the secondary synchronization estimator 304 operating according to Equation (4) is illustrated in detail in FIG. 6.

Referring to FIG. 6, the secondary synchronization estimator 304 includes a sample extractor 600, a downsampler 601, a conjugator 602, a common sequence generator 603, a multiplier 604, an adder 605, an absolute value calculator 606, and a maximum value detector 607.

In the present invention, the sample extractor 600 in operation, buffers samples of a predetermined period starting from the coarse timing acquired by the primary synchronization estimator 304 and extracts N/2 samples, thereby changing the start position of the buffered samples. The downsampler 601 downsamples the extracted samples to 1/2, i.e. extracts the odd-numbered samples of the samples from the sample extractor 600. The conjugator 602 calculates the complex conjugates of the downsamples. The common sequence generator 603 generates the ZAC sequence common to all BSs. The multiplier 604 multiplies the ZAC sequence by the sequence received from the conjugator 602.

The adder 605 sums values received from the multiplier 604. The absolute value calculator 606 calculates the absolute value of the sum. The maximum value detector 607 detects the maximum (i.e. peak) of absolute values received from the absolute value calculator 606 and determines the time of the maximum value as a fine timing. The fine timing is transmitted to the cell identifier 305 and the channel estimator 306.

FIG. 7 is a flowchart illustrating an operational algorithm of the secondary synchronization estimator 304 according to the present invention. Referring to FIG. 7, the secondary synchronization estimator 304 sets a variable m to an initial value '0' in step 701 and extracts N/2 samples after m samples from the coarse timing in step 703. The secondary synchronization estimator 304 acquires odd-numbered samples from the N/2 samples in step 705.

The secondary synchronization estimator 304 correlates the sequence of odd-numbered samples with the common sequence (i.e. ZAC sequence) in step 707 and compares the correlation results with a threshold value to detect a peak in step 709. If the peak is undetected, the secondary synchronization estimator 304 increases m by one in step 713 and returns to step 703. If the peak is detected, the secondary synchronization estimator 304 determines the position of the peak as a fine timing in step 711 and ends the algorithm.

In the present invention, a cell ID (Cell_id) is acquired by Equation (5) below.

$$cell\_id = \underset{m}{arg\,max} \left| \sum_{n=0}^{N/2-1} r(fine\_sync + 1 + 2n) \cdot \underset{m}{circular\_shift}(r(fine\_sync + 2n))^* \right|$$

$$\ldots\ldots(5)$$

The configuration of the cell identifier 305 operating according to Equation (5) is illustrated in detail in FIG. 8. Referring to FIG. 8, the cell identifier 305 includes a sample extractor 800, a first downsampler 801, a circular shifter 802, a second downsampler 803, a conjugator 804, a multiplier 805, an adder 806, an absolute value calculator 807, and a maximum value detector 808.

In operation, the sample extractor 800 extracts samples of length N/2 starting from the fine timing acquired by the secondary synchronization estimator 305. The first downsampler 801 outputs odd-numbered samples by downsampling the extracted samples to 1/2. The second downsampler 803 outputs even-numbered samples by downsampling the extracted samples to 1/2.

The circular shifter 802 circular-shifts the downsampled sequence received from the first downsampler 801 m times where m is sequentially increased until the maximum value detector 808 detects a maximum value (i.e. peak). The conjugator 804 calculates the complex conjugate of the downsampled sequence received from the second downsampler 803. The multiplier 805 multiplies the circular-shifted sequence by the complex conjugate.

The adder 806 adds values received from the multiplier 805. The absolute value calculator 807 calculates the absolute value of the sum. The maximum value detector 808 detects the maximum (i.e. peak) of absolute values received from the absolute value calculator 807 and determines a circular shift value m corresponding to the maximum value as a BS ID (Cell_id). The BS ID is provided to the channel estimator 306.

FIG. 9 is a flowchart illustrating an operational algorithm of the cell identifier 305 according to the present invention. Referring to FIG. 9, the cell identifier 305 extracts samples of length N/2 starting from the fine timing in step 901 and acquires odd-numbered samples and even-numbered samples in step 903.

In step 905, the cell identifier 305 sets a variable m to an initial value '1'. The cell identifier 305 circular-shifts the sequence of odd-numbered samples m times in step 907 and correlates the circular-shifted sequence with the sequence of even-numbered samples in step 909.

In step 911, the cell identifier 305 compares the correlation with a threshold value for detecting a peak. If the cell identifier 305 fails to detect the peak, it increases m by 1 in step 915 and returns to step 907. Upon detection of the peak, the cell identifier 305 determines a circular shift value m corresponding to the peak as a BS ID in step 913 and ends the algorithm. While peak detection is carried out, increasing m by 1 in the algorithm, it can be further contemplated that m is increased by the offset between BSs and the position of a peak is detected by fine adjustment.

In the present invention, the channel response coefficient h(m) is computed by Equation (6) below.

$$h(m) = \frac{\sum_{n=0}^{N/2-1} r(fine\_sync + n) \cdot \underset{m-1}{circular\_shift}(p(n+1))^*}{\sum_{n=0}^{N/2-1} r(fine\_sync + n)^2}$$

$$\ldots\ldots(6)$$

where $1 \leq m < 2 \times Cell\_id$.

The configuration of the channel estimator 306 operating according to Equation (6) is illustrated in detail in FIG. 10.

Referring to FIG. 10, the channel estimator 306 includes a sample extractor 1000, a preamble sequence generator 1001, a conjugator 1002, a multiplier 1003, and an adder 1004.

In operation, the sample extractor 1000 extracts samples of length N/2 starting from the fine timing acquired by the secondary synchronization estimator 304. The preamble sequence generator 1001 circular-shifts a preamble sequence created according to the BS ID acquired by the cell identifier 306 (i.e. the second part 102 in FIG. 1) m-1 $(1 \leq m < 2 \times Cell\_id)$ times.

The conjugator 1003 calculates the complex conjugate of the sequence received from the preamble sequence generator 1002. The multiplier 1003 multiplies the sequence from the sample extractor 1000. The adder 1004 generates a channel response coefficient h(m) by adding values received from the multiplier 1003. The channel response coefficient h(m) is calculated with respect to at most twice the BS ID (Cell_id) so that the ZAC property of a preamble sequence is maintained.

FIG. 11 is a flowchart illustrating an operational algorithm of the channel estimator 306 according to the present invention. Referring to FIG. 11, the channel estimator 306 extracts N/2 samples starting from the fine timing in step 1101 and sets a variable m to an initial value '1' in step 1103. In step 1105, the channel estimator 306 circular-shifts a preamble sequence of length N/2 acquired according to the BS ID m-1 times.

The channel estimator 306 calculates a channel response coefficient h(m) by correlating the N/2 samples with the circular-shifted sequence in step 1107 and compares m with $(2 \times Cell\_id)$ in step 1109. If m is less than $(2 \times Cell\_id)$, the channel estimator 306 increases m by one in step 1111 and returns to step 1105. If m is at least $2 \times Cell\_id$, the channel estimator 306 ends the algorithm.

In accordance with the present invention as described above, the preamble structure provides highly accurate timing synchronization and channel estimation performance and enables BS ID estimation with a less computation volume. In addition, since a known frequency offset estimation algorithm can be applied with the preamble structure, a single preamble sequence supports various functions including timing synchronization.

While the present invention has been shown and described with reference to certain preferred embodiments thereof, it will be understood by those skilled in the art that various changes in form and details may be made therein without departing from the spirit and scope of the invention as defined by the appended claims.

## Claims

1. An apparatus for transmitting a preamble signal in a wireless communication system, comprising:

   a first generator for generating a Zero Auto-Correlation (ZAC) sequence;
   a circular shifter for circular-shifting the ZAC sequence according to a Base Station (BS) Identifier (ID);
   a second generator for generating a sequence in which samples of the ZAC sequence alternate with samples of the circular-shifted sequence; and
   a repeater for generating a baseband preamble signal by repeating the sequence received from the second generator.

2. The apparatus of claim 1, further comprising:

   a guard interval adder for adding a guard interval to the baseband preamble signal;
   a digital-to-analog converter for converting sample data received from the guard interval adder to a baseband analog signal; and
   a Radio Frequency (RF) processor for processing the baseband analog signal to an RF signal and transmitting the RF signal.

3. The apparatus of claim 1, wherein the second generator comprises:

   a first oversampler for performing 2x oversampling on the ZAC sequence;
   a second oversampler for performing 2x oversampling on the circular-shifted sequence;
   a delay for delaying the oversampled sequence received from the second oversampler by one sample; and
   an adder for adding the oversampled sequence from the first oversampler to the delayed sequence.

4. An apparatus for receiving a preamble signal in a wireless communication system, the preamble signal being generated by circular-shifting a ZAC (Zero Auto-Correlation) sequence according to a Base Station (BS) Identifier (ID), alternating samples of the ZAC sequence with samples of the circular-shifted sequence, and repeating the sequence in which samples of the ZAC sequence alternate with samples of the circular-shifted sequence, the apparatus comprising:

   a primary synchronization estimator for acquiring coarse synchronization from received samples using an iterative property of the preamble signal in time; and
   a secondary synchronization estimator for acquiring fine synchronization by extracting received samples according to the coarse synchronization and correlating samples at first positions in the extracted samples with the ZAC sequence, the first positions being even positions or odd positions.

5. The apparatus of claim 4, further comprising a cell identifier for determining the BS ID (Cell_id) by extracting received samples according to the fine synchronization and detecting a relative shift between a sequence of samples at the first positions and a sequence of samples at second positions being the remaining positions.

6. The apparatus of claim 5, further comprising a channel estimator for calculating a channel response coefficient by extracting received samples according to the fine synchronization and correlating the extracted samples with a preamble sequence acquired according to the BS ID, while shifting the preamble sequence by one sample each time.

7. The apparatus of claim 4, wherein the primary synchronization estimator comprises:

   a correlator for extracting received samples of a preamble length, while changing a start point, and correlating first half samples of the extracted samples with last half samples of the extracted samples; and
   a maximum value detector for detecting a maximum value among correlations received from the correlator and determining a time point corresponding to the maximum value as a coarse timing.

**8.** The apparatus of claim 4, wherein the secondary synchronization estimator comprises:

a sample extractor for extracting a number of samples according to the coarse timing, while changing a starting point;
a correlator for correlating a sequence of samples at the first positions with the ZAC sequence; and
a maximum value detector for detecting a peak in correlations received from the correlator and detecting a time point corresponding to the peak as a fine timing.

**9.** The apparatus of claim 5, wherein the cell identifier comprises:

a sample extractor for extracting samples of a predetermined length starting from the fine timing;
a downsampler for acquiring a first-position sequence by selecting samples at the first positions from the extracted samples and acquiring a second-position sequence by selecting samples at the second positions from the extracted samples;
a circular shifter for circular-shifting the first-position sequence according to a sequentially increasing circular shift value m ;
a correlator for correlating the circular-shifted sequence with the second-position sequence; and
a maximum value detector for detecting a peak in correlations received from the correlator and determining a circular-shift value m corresponding to the peak as the BS ID.

**10.** The apparatus of claim 6, wherein the channel estimator comprises:

a sample extractor for extracting samples of a predetermined length starting from the fine timing;
a preamble sequence generator for circular-shifting the preamble sequence acquired according to the BS ID n-1 times ($1 \leq n2xCell\_id$);
a conjugator for calculating a complex conjugate of the circular-shifted sequence received from the preamble sequence generator;
a multiplier for multiplying the extracted samples by the complex conjugate; and
an adder for calculating a channel response coefficient h(m) by adding outputs of the multiplier.

**11.** A method of transmitting a preamble signal in a wireless communication system, comprising the steps of:

generating a Zero Auto-Correlation (ZAC) sequence;
circular-shifting the ZAC sequence according to a Base Station (BS) Identifier (ID);
generating a preamble sequence in which samples of the ZAC sequence alternate with samples of the circular-shifted sequence; and
generating a baseband preamble signal by repeating the preamble sequence.

**12.** The method of claim 11, further comprising :

adding a guard interval to the baseband preamble signal;
converting the guard interval-added signal data to an analog signal; and
processing the analog signal to an Radio Frequency (RF) signal and transmitting the RF signal through an antenna.

**13.** The method of claim 11, wherein the preamble sequence generation step comprises :

performing 2x oversampling on the ZAC sequence;
performing 2x oversampling on the circular-shifted sequence;
delaying the oversampled circular-shifted sequence by one sample; and
adding the oversampled ZAC sequence to the delayed sequence.

**14.** A method of receiving a preamble signal in a wireless communication system, the preamble signal being generated by circular-shifting a ZAC (Zero Auto-Correlation) sequence according to a Base Station (BS) Identifier (ID), alternating samples of the ZAC sequence with samples of the circular-shifted sequence, and repeating the sequence in which samples of the ZAC sequence alternate with samples of the circular-shifted sequence, the method comprising the steps of:

acquiring coarse synchronization from received samples using an iterative property of the preamble signal in time; and

acquiring fine synchronization by extracting received samples according to the coarse synchronization and correlating samples at first positions in the extracted samples with the ZAC sequence, the first positions being even positions or odd positions.

15. The method of claim 14, further comprising determining the BS ID (Cell_id) by extracting received samples according to the fine synchronization and detecting a relative shift between a sequence of samples at the first positions and a sequence of samples at second positions being the remaining positions.

16. The method of claim 15, further comprising t calculating a channel response coefficient by extracting received samples according to the fine synchronization and correlating the extracted samples with a preamble sequence acquired according to the BS ID, while shifting the preamble sequence by one sample each time.

17. The method of claim 14, wherein the coarse synchronization acquisition step comprises :

extracting received samples of a preamble length, while changing a start point, and correlating first half samples of the extracted samples with last half samples of the extracted samples; and

detecting a maximum value among correlations and determining a time point corresponding to the maximum value as a coarse timing.

18. The method of claim 14, wherein the fine synchronization acquisition step comprises :

extracting a number of samples according to the coarse timing, while changing a starting point;

correlating a sequence of samples at the first positions with the ZAC sequence; and

detecting a peak in correlations and detecting a time point corresponding to the peak as a fine timing.

19. The method of claim 15, wherein the BS ID determining step comprises :

extracting samples of a predetermined length starting from the fine timing;

acquiring a first-position sequence by selecting samples at the first positions from the extracted samples and acquiring a second-position sequence by selecting samples at the second positions from the extracted samples;

circular-shifting the first-position sequence according to a sequentially increasing circular shift value m;

correlating the circular-shifted sequence with the second-position sequence; and

detecting a peak in correlations and determining a circular-shift value m corresponding to the peak as the BS ID.

20. The method of claim 16, wherein the channel response coefficient calculation step comprises :

extracting samples of a predetermined length starting from the fine timing;

circular-shifting the preamble sequence acquired according to the BS ID n-1 times ($1 \leq n2xCell\_id$);

calculating the complex conjugate of the circular-shifted sequence; and

multiplying the extracted samples by the complex conjugate and calculating a channel response coefficient h (m) by adding the products.

FIG.1

FIG.2

301
302
303

RF PROCESSOR → ADC → PRIMARY SYNCHRONIZATION ESTIMATOR

304

SECONDARY SYNCHRONIZATION ESTIMATOR

305

CELL IDENTIFIER

306

CHANNEL ESTIMATOR

FIG.3

400
401

DELAY → CONJUGATOR

402

405
404
403

COARSE SYNC ← MAXIMUM VALUE DETECTOR ← ABSOLUTE VALUE CALCULATOR ← ADDER

FIG.4

START

m = 0 ~501

EXTRACT N SAMPLES AFTER m
SAMPLES FROM PREDETERMINED
POSITION ~503

CORRELATE FIRST N/2 SAMPLES
WITH LAST N/2 SAMPLES ~505

507
PEAK DETECTED? — NO

YES

DETERMINE COARSE TIMING ~509

m = m+1 ~511

END

FIG.5

603
COMMON
SEQUENCE
GENERATOR

600
SAMPLE
EXTRACTOR

601
DOWNSAMPLER

602
CONJUGATOR

604

607
MAXIMUM
VALUE
DETECTOR

606
ABSOLUTE
VALUE
CALCULATOR

605
ADDER

FINE SYNC

FIG.6

START

m = 0 ~701

EXTRACT N/2 SAMPLES AFTER m
SAMPLES FROM COARSE TIMING ~703

ACQUIRED ODD-NUMBERED
SAMPLES ~705

CORRELATE ODD-NUMBERED
SAMPLES WITH COMMON
SEQUENCE ~707

709
PEAK DETECTED? ——NO——

YES

DETERMINE FINE TIMING ~711        m = m+1 ~713

END

FIG.7

800
SAMPLE
EXTRACTOR

801
1ST
DOWNSAMPLER

802
CIRCULAR
SHIFTER

803
2ND
DOWNSAMPLER

804
CONJUGATOR

805

806
ADDER

807
ABSOLUTE
VALUE
CALCULATOR

808
MAXIMUM
VALUE
DETECTOR

CELL_ID

FIG.8

START

EXTRACT N SAMPLES STARTING
FROM FINE TIMING — 901

ACQUIRE ODD-NUMBERED SAMPLES
AND EVEN-NUMBERED SAMPLES — 903

m = 1 — 905

CIRCULAR-SHIFT ODD-NUMBERED
SAMPLES m TIMES — 907

CORRELATE CIRCULAR-SHIFTED
SEQUENCE WITH EVEN-NUMBERED
SAMPLES — 909

911
PEAK DETECTED? — NO

YES

DETERMINE m AS Cell_id — 913

m = m+1 — 915

END

# FIG.9

m(1≤m<2*Cell_id.)

1000                    1003              1002                    1001

SAMPLE
EXTRACTOR    →    ⊗    ←    CONJUGATOR    ←    PREAMBLE
SEQUENCE
GENERATOR

1004

h(m)    ←    ADDER

FIG.10

START

EXTRACT N/2 SAMPLES
STARTING FROM FINE TIMING ~1101

m = 1 ~1103

CIRCULAR-SHIFT KNOWN
PREAMBLE SEQUENCE m TIMES ~1105

CALCULATE CHANNEL
RESPONSE COEFFICIENT h(m) ~1107

1109

$m \geq 2*Cell\_id?$

NO

m = m+1 ~1111

YES

END

FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 200546508